# EUROPÄISCHE PATENTSCHRIFT

(11) **EP 0 944 479 B1**
(45) Veröffentlichungstag und Bekanntmachung des Hinweises auf die Patenterteilung: **18.10.2000**
(21) Anmeldenummer: 97952836.1
(22) Anmeldetag: 01.12.1997
(51) Int. Cl.: B41M 5/26, C08K 3/22

(54) **VERWENDUNG VON HYDRIDHALTIGEM ALUMINIUMOXID ZUR ERZEUGUNG VON OPTISCH ERKENNBAREN MARKIERUNGEN UND BESCHRIFTUNGEN**
USE OF HYDRIDE-CONTAINING ALUMINIUM OXIDE FOR PRODUCING OPTICALLY DETECTABLE MARKINGS AND INSCRIPTIONS
UTILISATION D'OXYDE D'ALUMINIUM A BASE D'HYDRURE POUR REALISER DES REPERES ET DES INSCRIPTIONS IDENTIFIABLES OPTIQUEMENT

(30) Priorität: 16.12.1996 DE 19652242
(43) Veröffentlichungstag der Anmeldung: 29.09.1999
(73) Patentinhaber: BASF AKTIENGESELLSCHAFT, 67056 Ludwigshafen (DE)
(72) Erfinder: SEEGER, Oliver, D-68163 Mannheim (DE); FABER, Stefan, D-66687 Wadern (DE); VEITH, Michael, D-66386 St. Ingbert (DE); FRITSCHER, Eckehard, D-67714 Waldfischbach (DE); DAUSCH, Wilma, M., D-67117 Limburgerhof (DE); SCHMID, Raimund, D-67435 Neustadt-Mussbach (DE)
(86) Internationale Anmeldenummer: EP9706710
(87) Internationale Veröffentlichungsnummer: WO9826937

(56) Entgegenhaltungen:
- EP-A- 0 447 032
- EP-A- 0 607 597
- US-A- 5 445 923

## Beschreibung

Die vorliegende Erfindung betrifft die Verwendung von hydridhaltigem Aluminiumoxid, das einen Wasserstoffgehalt von 15 bis 100 Atom-%, bezogen auf Aluminium, aufweist, zur Erzeugung von optisch erkennbaren Markierungen und Beschriftungen.

Weiterhin betrifft die Erfindung ein Verfahren zur Erzeugung von optisch erkennbaren Markierungen und Beschriftungen sowie die Verwendung der nach diesem Verfahren markierten oder beschrifteten Substrate zur Informationsspeicherung.

Die eindeutige Kennzeichnung unterschiedlichster Produktionsgüter ist in nahezu allen Industriezweigen von wachsender Bedeutung. Informationen wie Seriennummern, Haltbarkeitsdaten, Barcodes und Firmenlogos müssen auf unterschiedlichste Materialien aufgebracht werden. Weit verbreitet sind konventionelle Markierungstechniken wie Etikettieren, Stempeln, Drucken und Prägen.

Zunehmend wichtiger wird jedoch das berührungslose Markieren mit Lasern, das eine außerordentlich schnelle und flexible Kennzeichnung von Substraten mit planen oder nichtplanen Oberflächen erlaubt. Das lasermarkierbare Material kann dabei als Film auf die Oberfläche des zu markierenden Gegenstands aufgebracht oder, insbesondere wenn es sich um einen Kunststoffgegenstand handelt, direkt eingearbeitet und dann beschriftet werden. Die auf diese Weise vom Kunststoff umhüllten Markierungen sind besonders dauerhaft und abriebbeständig und können durch Farbänderung von Pigmenten unter Lasereinwirkung erzeugt werden.

So ist es aus der DE-A-29 36 926 bekannt, Ruß oder Graphit in Kunststoff einzuarbeiten und durch Laserbestrahlung eine Entfärbung zu bewirken und damit Markierungen zu erzeugen. In der EP-A-400 305 werden Kupfer(II)hydroxidphosphat oder Molybdän(VI)oxid als im sichtbaren Wellenlängenbereich farblose, sich bei Lasereinwirkung jedoch dunkel färbende Kunststoffzuschlagsstoffe beschrieben. Schließlich werden in der US-A-4 816 374 Antimontrioxid und in der DE-A-44 15 802 mit antimondotiertem Zinndioxid beschichtete Glimmerpigmente als Markierungsmittel eingesetzt.

Diese Markierungsmittel sind jedoch in verschiedener Hinsicht nicht zufriedenstellend. Entweder führen sie bereits vor dem Markieren zu einer Verfärbung des Kunststoffs, sind also nicht farblos, oder sie enthalten unerwünschte Schwermetalle.

Weiterhin ist aus den EP-A-447 032 und 607 597 sowie der US-A-5 445 923 der Einsatz von Aluminiumoxid und Aluminiumhydroxid in lasermarkierbaren Zusammensetzungen bekannt.

Der Erfindung lag die Aufgabe zugrunde, den genannten Mängeln abzuhelfen und ein Markierungsmittel mit vorteilhaften Eigenschaften bereitzustellen.

Demgemäß wurde die Verwendung von hydridhaltigem Aluminiumoxid, das einen Wasserstoffgehalt von 15 bis 100 Atom-%, bezogen auf Aluminium, aufweist, zur Erzeugung von optisch erkennbaren Markierungen oder Beschriftungen gefunden.

Außerdem wurde ein Verfahren zur Erzeugung von optisch erkennbaren Markierungen oder Beschriftungen gefunden, welches dadurch gekennzeichnet ist, daß man ein zu markierendes Substrat mit hydridhaltigem Aluminiumoxid, das einen Wasserstoffgehalt von 15 bis 100 Atom-%, bezogen auf Aluminium, aufweist, beschichtet oder dieses in das Substratmaterial einarbeitet und das nahezu farblose hydridhaltige Aluminiumoxid durch gezielte Einwirkung einer Energiequelle in schwarzes, metallisches Aluminium enthaltendes Aluminiumoxid umwandelt.

Nicht zuletzt wurde die Verwendung der nach diesem Verfahren markierten oder beschrifteten Substrate zur Informationsspeicherung gefunden.

Das erfindungsgemäß eingesetzte hydridhaltige Aluminiumoxid weist einen Wasserstoffgehalt von 15 bis 100 Atom-%, bevorzugt 30 bis 70 Atom-%, jeweils bezogen auf Aluminium, auf und eignet sich hervorragend zur Erzeugung optisch erkennbarer Markierungen und Beschriftungen, da es, in Abhängigkeit von der vorliegenden Schichtdicke beim filmartigen Aufbringen bzw. den Partikeldimensionen bei partikulärer Form, nahezu farblos bis gelb bis braun gefärbt, aber stets transparent ist und sich beim Erhitzen (in der Regel bei Temperaturen > 400°C, insbesondere von 450 bis 500°C) in grau bis schwarz gefärbtes, metallisches Aluminium enthaltendes Aluminiumoxid umwandelt, das im allgemeinen einen Gehalt an metallischem Aluminium von 15 bis 100 mol-%, vorzugsweise 30 bis 70 mol-%, jeweils bezogen auf Al₂O₃, hat.

Durch die Einwirkung der thermischen Energie wird die Aluminium-Wasserstoffbindung gespalten, Wasserstoff entweicht, und es bilden sich Aluminiumpartikel in einer Matrix aus Aluminiumoxid (Nanokomposite mit einer Aluminiumpartikelgröße bis etwa 50 nm).

Die Aluminiumpartikel sind in der Matrix vor Alterung und Korrosion geschützt und ermöglichen eine dauerhafte, abriebfeste und kontrastreiche Markierung.

Die Größe dieser Aluminiumcluster ist von der Dauer der Energiezufuhr abhängig und variiert von 1 bis 200 nm. Die Ausdehnung dieser Aluminiuminseln (und damit der Grad der Schwärzung) korreliert mit dem Shift des Al-Peaks im ²⁷Al-NMR-spektrum und ist auf diese Weise sowie über Transmissionselektronenspektroskopie kontrollierbar.

Das erfindungsgemäß als Markierungsmittel eingesetzte hydridhaltige Aluminiumoxid kann, wie in der nicht vorveröffentlichten DE-A-195 29 241 beschrieben, durch Gasphasenzersetzung von Aluminiummonoalkoxydihydriden der Formel I

Al(OR)H₂ I

in der R C₃-C₁₀-Alkyl oder C₅-C₈-cycloalkyl bedeutet, unter inerten Bedingungen bei 250 bis 400°C hergestellt werden.

Besonders geeignet sind hierbei Aluminiumalkoxydihydride I, die verzweigte C₄-C₈-Alkoxyreste aufweisen, wie Aluminium-tert.-butoxydihydrid.

Die Aluminiumalkoxydihydride I selbst können, wie ebenfalls aus der nicht vorveröffentlichten DE-A-195 29 241 bekannt, durch Umsetzung von Aluminiumhydrid mit dem entsprechenden Alkohol im Molverhältnis 1 : 1 erhalten werden, wobei Aluminiumhydrid in situ durch Reaktion eines Alkalimetallaluminiumhydrids mit Aluminiumchlorid hergestellt werden kann.

Soll das hydridhaltige Aluminiumoxid als zusammenhängender Film auf ein zu markierendes Substrat aufgebracht werden, so kann die Substratbeschichtung vorteilhaft mit der Herstellung des hydridhaltigen Aluminiumoxids verknüpft werden, indem die Gasphasenzersetzung des Aluminiumalkoxydihydrids I in Gegenwart des Substrats vorgenommen wird.

Als Substrate eignen sich dabei Gegenstände oder Werkstücke unterschiedlichster Form und Größe, welche auf die Reaktionstemperatur von 250 bis 400°C erhitzt werden können.

Beispiele für geeignete Substratmaterialien sind Metalle wie Kupfer, Silber, Gold, Chrom, Nickel, Cobalt, Palladium, Platin und Aluminium, Metallegierungen, z.B. Stahl, und Halbmetalle wie Silicium sowie nichtmetallische Materialien wie Quarzglas und andere Glasarten.

Der für die Beschichtung eingesetzte Reaktor ist an das jeweilige Substrat bzw. seine Dimensionen anzupassen. Quadratzentimetergroße, elektrisch leitende Metallplättchen oder -folien können z.B., wie in der nicht vorveröffentlichten DE-A-195 29 241 und von M. Veith und S. Kneip in Journal of Materials Science Letters 13, Seite 335 - 337 (1994) beschrieben, in einem Reaktionsrohr aus Duran- oder Quarzglas, das eingangsseitig an ein auf die gewünschte Verdampfungstemperatur temperiertes Vorratsgefäß mit dem Aluminiumalkoxydihydrid I und ausgangsseitig an eine Vakuumpumpe angeschlossen ist und sich in einem Hochfrequenzinduktionsfeld befindet, mit Hilfe dessen die Substratplättchen erhitzt werden, nach Inertisieren bei einem Vakuum von in der Regel 10⁻⁴ mbar bis Atmosphärendruck in jeder gewünschten Schichtdicke mit hydridhaltigem Aluminiumoxid beschichtet werden.

Soll das hydridhaltige Aluminiumoxid als Pulver in Kunststoffe eingearbeitet werden, was vorteilhaft bei deren Formgebung geschieht, wobei die Umwandlungstemperatur des hydridhaltigen Aluminiumoxids naturgemäß nicht überschritten werden sollte, oder in Lacken, Anstrichmitteln oder Druckfarben eingesetzt werden, so kann die bei der Gasphasenzersetzung auf einem geeigneten Substrat abgeschiedene Schicht aus hydridhaltigem Aluminiumoxid abgekratzt oder abgelöst und auf die gewünschte Teilchengröße gebracht werden.

Eine weitere Möglichkeit, das hydridhaltige Aluminiumoxid in partikulärer Form sowohl in Kunststoffen als auch in Lacken, Anstrichmitteln oder Druckfarben einzusetzen, besteht darin, pigmentäre Substrate mit dem hydridhaltigen Aluminiumoxid zu beschichten. Dies kann vorteilhaft in einem Wirbelschichtreaktor (z.B. in der EP-A-45 851 beschrieben) geschehen, in dem die Pigmentteilchen unter Verwirbelung mit einem inerten Wirbelgas auf die Reaktionstemperatur erhitzt werden und in den das Aluminiumalkoxydihydrid I mit Hilfe eines inerten Trägergases aus einem entsprechend temperierten, vorgeschalteten Verdampfer überführt wird.

Als pigmentäre Substrate eignen sich dabei sowohl anorganische als auch organische Pigmente, die bei der Beschichtungstemperatur stabil sind. Geeignet sind z.B. Metallplättchen wie Aluminiumflakes und oxidische Plättchen wie Glimmer-, Talk- und Glasschuppen, die jeweils bereits mit einer hoch- oder niedrigbrechenden, selektiv absorbierenden oder farblosen Metalloxidschicht belegt sein können.

Geeignete Energiequellen für die anschließende Markierung sind vor allem solche, die thermische Energie freisetzen, also eine Erwärmung des bestrahlten Substrats bzw. der Beschichtung aus dem hydridhaltigen Aluminiumoxid und damit die Bildung von Aluminiumpartikeln bewirken. Beispiele für besonders geeignete Energiequellen sind Maser und vor allem Laser, insbesondere solche, die im IR- bis VIS-Bereich emittieren wie CO₂-Laser und Nd-YAG-Laser, die sich durch besondere Markierungsschärfe auszeichnen.

Die Markierung (Umwandlung der hydrid- in die aluminiummetallhaltige Aluminiumoxidschicht) kann gezielt durch die Bestrahlungsleistung der Energiequelle, insbesondere des Lasers, und die Bestrahlungszeit bzw. die Pulszahl bei Pulslasern gesteuert werden. Je nach Lasertyp und Beschriftungsverfahren (Maskenverfahren sowie Lasermarkierung durch Strahlablenkung) können mit dem erfindungsgemäßen Markierungsmittel kleinste Strichstärken von in der Regel 0,5 µm und größte Strichstärken von 10 mm erzeugt werden. Punktierungen können durch Einwirkung zweier senkrecht zueinander stehenden Laser, deren Energie nur im Schnittpunkt der Strahlengänge zur Markierung ausreicht, erzielt werden.

Die Lasereinstrahlung bewirkt nicht nur die auf der Änderung der chemischen Zusammensetzung des hydridhaltigen Aluminiumoxids beruhende, optisch erkennbare Veränderung, sondern führt auch zu Änderungen der physikalischen Eigenschaften wie Absorption, Brechung, elektrische Leitfähigkeit und Wärmeleitfähigkeit, die ebenfalls detektiert werden können.

Schließlich eignen sich die erfindungsgemäß markierten bzw. beschrifteten Substrate auch zur Informationsspeicherung. Je nach Energie und Dauer der Einwirkung eines Laserstrahls auf die Schicht aus dem hydridhaltigen Aluminiumoxid werden durch zunehmende Bildung von metallischem Aluminium verschiedene Graustufen realisiert, die zu einer Änderung des Verhältnisses von Absorption und Brechung an der bestrahlten Stelle führen. Über Änderungen des Brechungsindexes kann es auch zu Phasenverschiebungen des reflektierten Lichts kommen. Zur Detektion der gespeicherten Information können z.B. die Helligkeitsunterschiede in der hell/ dunkel-strukturierten Schicht über unterschiedliche Reflexion von eingestrahltem Laserlicht registriert und entschlüsselt werden.

### Beispiel

Eine 3x3 cm² große mattierte Kupferplatte wurde in der oben beschriebenen Apparatur in einer Stickstoffatmosphäre von 100 Pa Druck induktiv auf 320°C erhitzt. 0,2 g Aluminium-tert.-butoxydihydrid wurden in 10 min bei Raumtemperatur aus einem Vorratsgefäß in den Reaktionsraum überführt und dort an der Kupferplatte unter Bildung eines ca. 1 µm dicken hydridhaltigen Aluminiumoxidfilms zersetzt.

Diese Schicht wurde mit einem CO2-Laser mit variabler Leistung von 100 - 1000 W sowie variabler Einstrahlzeit (µs - s) und einer Rotationsgeschwindigkeit von 1000 U/min beschrieben. Es wurde eine deutliche, kontrastreiche, als Barcode geeignete, abriebfeste Beschriftung erhalten.

## Patentansprüche

1. Verwendung von hydridhaltigem Aluminiumoxid, das einen Wasserstoffgehalt von 15 bis 100 Atom-%, bezogen auf Aluminium, aufweist, zur Erzeugung von optisch erkennbaren Markierungen und Beschriftungen.

2. Verfahren zur Erzeugung von optisch erkennbaren Markierungen und Beschriftungen, dadurch gekennzeichnet, daß man ein zu markierendes Substrat mit hydridhaltigem Aluminiumoxid, das einen Wasserstoffgehalt von 15 bis 100 Atom-%, bezogen auf Aluminium, aufweist, beschichtet oder das hydridhaltige Aluminiumoxid in das Substratmaterial einarbeitet und das nahezu farblose hydridhaltige Aluminiumoxid durch gezielte Einwirkung einer Energiequelle in schwarzes, metallisches Aluminium enthaltendes Aluminiumoxid umwandelt.

3. Verfahren nach Anspruch 2, dadurch gekennzeichnet, daß man eine Energiequelle einsetzt, die eine Erwärmung des bestrahlten Substrats bewirkt.

4. Verfahren nach Anspruch 2 oder 3, dadurch gekennzeichnet, daß man als Energiequelle Laser, die im IR- bis VIS-Bereich emittieren, einsetzt.

5. Verfahren nach den Ansprüchen 2 bis 4, dadurch gekennzeichnet, daß man auf das Substrat eine Beschichtung aufbringt, die im wesentlichen aus hydridhaltigem Aluminiumoxid besteht oder in der partikuläres hydridhaltiges Aluminiumoxid oder mit hydridhaltigem Aluminiumoxid beschichtete Pigmentteilchen dispergiert sind.

6. Verfahren nach Anspruch 5, dadurch gekennzeichnet, daß die Partikel aus hydridhaltigem Aluminiumoxid oder die mit hydridhaltigem Aluminiumoxid beschichteten Pigmentteilchen in einer Lack-, Anstrichfarben- oder Druckfarbenbindemittelschicht dispergiert sind.

7. Verfahren nach den Ansprüchen 2 bis 4, dadurch gekennzeichnet, daß man Partikel aus hydridhaltigem Aluminiumoxid oder mit hydridhaltigem Aluminiumoxid beschichtete Pigmentteilchen in Formmassen, Halbzeuge oder Fertigteile aus Kunststoff einarbeitet.

8. Verwendung der gemäß den Ansprüchen 2 bis 7 markierten oder beschrifteten Substrate zur Informationsspeicherung.

## Claims

1. The use of hydride-containing aluminum oxide which has a hydrogen content of from 15 to 100 atom-%, based on aluminum, for producing optically recognizable markings and inscriptions.

2. A process for producing optically recognizable markings and inscriptions, which comprises coating the hydride-containing aluminum oxide which has a hydrogen content of from 15 to 100 atom-%, based on aluminum, onto a substrate to be marked, or incorporating it into the substrate material, and converting the virtually colorless hydride-containing aluminum oxide into aluminum oxide containing black, metallic aluminum by specific exposure to an energy source.

3. A process as claimed in claim 2, wherein use is made of an energy source which effects warming of the irradiated substrate.

4. A process as claimed in claim 2 or 3, wherein the energy source used is a laser which emits in the IR to VIS region.

5. A process as claimed in any one of claims 2 to 4, wherein a coating essentially consisting of hydride-containing aluminum oxide or in which particulate, hydride-containing aluminum oxide or pigment particles coated with hydride-containing aluminum oxide are dispersed is applied to the substrate.

6. A process as claimed in claim 5, wherein the particles of hydride-containing aluminum oxide or the pigment particles coated with hydride-containing aluminum oxide are dispersed in a coating, paint or printing-ink binder coating.

7. A process as claimed in any one of claims 2 to 4, wherein particles of hydride-containing aluminum oxide or pigment particles coated with hydride-containing aluminum oxide are incorporated into molding compositions, semifinished products or finished products made of plastic.

8. The use of a substrate marked or inscribed as claimed in any one of claims 2 to 7 for information storage.

## Revendications

1. Utilisation d'oxyde d'aluminium contenant des hydrures présentant une teneur en hydrogène de 15 à 100% en atomes, par rapport à l'aluminium, pour l'obtention de marquages et d'inscriptions reconnaissables optiquement.

2. Procédé d'obtention de marquages et d'inscriptions reconnaissables optiquement, caractérisé en ce que l'on enduit un substrat à marquer avec de l'oxyde d'aluminium contenant des hydrures, présentant une teneur en hydrogène de 15 à 100 % en atomes, par rapport à l'aluminium, ou bien l'on incorpore l'oxyde d'aluminium contenant des hydrures dans le matériau du substrat et l'on transforme l'oxyde d'aluminium contenant des hydrures quasiment incolore en oxyde d'aluminium contenant de l'aluminium métallique noir, sous l'action ciblée d'une source d'énergie.

3. Procédé selon la revendication 2, caractérisé en ce que l'on utilise une source d'énergie qui génère un échauffement du substrat irradié.

4. Procédé selon la revendication 2 ou 3, caractérisé en ce que l'on utilise, en tant que source d'énergie, un laser qui émet dans le domaine IR à VIS.

5. Procédé selon l'une quelconque des revendications 2 à 4, caractérisé en ce que l'on dépose sur le substrat un revêtement, constitué pour l'essentiel d'oxyde d'aluminium contenant des hydrures ou dans lequel sont dispersés de l'oxyde d'aluminium particulaire contenant des hydrures contenant des hydrures ou des particules de pigment enduites d'oxyde d'aluminium contenant des hydrures.

6. Procédé selon la revendication 5, caractérisé en ce que les particules en oxyde d'aluminium contenant des hydrures ou les particules de pigment enduites d'oxyde d'aluminium contenant des hydrures sont dispersées dans une couche de vernis, de peinture ou de liant pour encre d'imprimerie.

7. Procédé selon l'une quelconque des revendications 2 à 4, caractérisé en ce que l'on incorpore des particules d'oxyde d'aluminium contenant des hydrures ou des particules de pigments enduites d'oxyde d'aluminium contenant des hydrures, dans des masses à mouler, des produits demi-finis ou des pièces finies en matière synthétique.

8. Utilisation de substrats inscrits ou marqués selon l'une quelconque des revendications 2 à 7 pour le stockage d'informations.
